# EUROPEAN PATENT SPECIFICATION

(11) **EP 4 660 038 B1**
(45) Date of publication and mention of the grant of the patent: **11.11.2026**
(21) Application number: 25180188.2
(22) Date of filing: 02.06.2025
(51) Int. Cl.: B60W 40/068, B60W 30/02, B60W 40/109, B60W 40/114

(54) **ROAD-SURFACE FRICTION COEFFICIENT ESTIMATION DEVICE, ROAD-SURFACE FRICTION COEFFICIENT ESTIMATION METHOD, AND STORAGE MEDIUM**
VORRICHTUNG ZUR SCHÄTZUNG DES REIBUNGSKOEFFIZIENTEN EINER STRASSENOBERFLÄCHE, VERFAHREN ZUR SCHÄTZUNG DES REIBUNGSKOEFFIZIENTEN EINER STRASSENOBERFLÄCHE UND SPEICHERMEDIUM
DISPOSITIF D'ESTIMATION DE COEFFICIENT DE FROTTEMENT DE SURFACE DE ROUTE, PROCÉDÉ D'ESTIMATION DE COEFFICIENT DE FROTTEMENT DE SURFACE DE ROUTE ET SUPPORT DE STOCKAGE

(30) Priority: 05.06.2024 JP 2024091661
(43) Date of publication of application: 10.12.2025
(73) Proprietor: Honda Motor Co., Ltd., Toyko 105-8404 (JP)
(72) Inventor: SUMIOKA, Tadashi, Saitama, 351-0193 (JP); TSUJIMURA, Takuya, Saitama, 351-0193 (JP); TAKAYANAGI, Sho, Saitama, 351-0193 (JP); YAMAGISHI, Masato, Saitama, 351-0193 (JP); AKIMOTO, Kazushi, Saitama, 351-0193 (JP)
(74) Representative: Weickmann & Weickmann PartmbB

(56) References cited:
- EP-A1- 2 394 876
- JP-A- H07 186 989
- US-A1- 2004 267 492
- US-A1- 2022 169 306

## Description

### CROSS-REFERENCE TO RELATED APPLICATION

Priority is claimed on Japanese Patent Application No. 2024-091661, filed June 5, 2024.

### BACKGROUND

### Field of the Invention

The present invention relates to a road-surface friction coefficient estimation device, a road-surface friction coefficient estimation method, and a storage medium.

### Description of Related Art

Recently, countermeasures for providing an access to a sustainable transportation system in which vulnerable persons out of traffic participants are considered have been actively studied. In order to realize such countermeasures, focus has been concentrated on research and development for further improving safety or convenience of traffic through research and development on driving support.

In driving support, a two-wheel vehicle including an inertial measurement unit (IMU) to perform detection of a vehicle state and stabilization control is known (for example, Japanese Unexamined Patent Application, First Publication No. 2021-54184). In order to ascertain a change in roll moment causing a fall of a two-wheel vehicle, it is necessary to estimate a road-surface friction coefficient.

For example, a road-surface friction coefficient estimated value µ_estm which is an estimated value of the road-surface friction coefficient µ is calculated using δ1_sens, δ2_sens, γ_sens, γdot_sens, and Accy_sens of observation target quantity detected values generated by an observation target quantity detecting means, a total road-surface reaction force combined translational force vector estimated value ↑Fg_total_estm and a total road-surface reaction force combined yaw moment estimated value Mgz_total_estm calculated by a vehicle model calculating means 24, and a vehicle center-of-gravity longitudinal velocity estimated value Vgx_estm of vehicle motion state quantity estimated values calculated by the vehicle model calculating means (for example, see Japanese Patent No. 5185873).

JP H07 186989 A discloses a road-surface friction coefficient estimation device according to the preamble of claim 1, comprising in particular a lateral acceleration calculator and a road-surface friction estimator.

### SUMMARY

However, in estimating a sideslip angle and a road-surface friction coefficient according to the related art, the sideslip angle is used to estimate the road-surface friction coefficient, and the road-surface friction coefficient is used to estimate the sideslip angle. In this way, since the sideslip angle and the road-surface friction coefficient depend on each other in the related art, it is difficult to adjust control.

The present invention was made in consideration of the aforementioned problem, and an objective thereof is to provide a road-surface friction coefficient estimation device, a road-surface friction coefficient estimation method, and a storage medium that can accurately estimate a road-surface friction coefficient and easily perform control adjustment. Another objective thereof is to contribute to advancement of a sustainable transportation system.
(1) In order to achieve the aforementioned objective, according to an aspect of the present invention, there is provided a road-surface friction coefficient estimation device according to claim 1.
(2) In the road-surface friction coefficient estimation device according to the aspect of (1), the lateral acceleration calculator may calculate the acceleration in the lateral direction under the conditions in which a slip does not occur.
(3) In the road-surface friction coefficient estimation device according to the aspect of (1), the road-surface friction estimator may estimate the road-surface friction coefficient without using a sideslip angle estimated value.
(4) The road-surface friction coefficient estimation device according to the aspect of (1) may further include a controller configured to control a roll moment due to an acceleration applied from an inertial system using the estimated road-surface friction coefficient and a sideslip angle.
(5) In order to achieve the aforementioned objective, according to another aspect of the present invention, there is provided a road-surface friction coefficient estimation method according to claim 5.
(6) In order to achieve the aforementioned objective, according to another aspect of the present invention, there is provided a non-transitory computer-readable storage medium according to claim 6.

According to the aspects of (1) to (6), it is possible to accurately estimate a road-surface friction coefficient and easily perform control adjustment.

According to the aspect of (4), it is possible to control a roll moment due to an acceleration applied from an inertial system.

### BRIEF DESCRIPTION OF THE DRAWINGS

FIG. 1 is a diagram illustrating an example of an appearance of a straddle type vehicle.
FIG. 2 is a diagram illustrating an example of a configuration of a road-surface friction coefficient estimation system according to an embodiment.
FIG. 3 is a diagram illustrating dynamics of a road-surface friction coefficient model.
FIG. 4 is a diagram illustrating an example of a geometric model and an example of elements used to calculate a ground lateral acceleration a_{y_model}.
FIG. 5 is a diagram illustrating signs or the like used to calculate the ground lateral acceleration a_{y_model}.
FIG. 6 is a diagram illustrating signs or the like used to calculate actual wheel radii.
FIG. 7 is a flowchart illustrating an example of a process flow that is performed by a control device according to the embodiment.
FIG. 8 is a diagram illustrating an example of a measured value and an estimation result of a lateral acceleration at the time of slalom traveling.
FIG. 9 is a diagram illustrating an example of a road-surface friction coefficient estimation result.

### DESCRIPTION OF EMBODIMENTS

Hereinafter, embodiments of the present invention will be described with reference to the accompanying drawings. In the drawings used for the following description, scales of constituent members are appropriately changed in order to allow the constituent members to be illustrated in recognizable sizes.

In all the drawings used to describe embodiments, constituent members having the same functions will be referred to by the same reference signs, and repeated description thereof will be omitted.

"On the basis of XX" mentioned in this specification means "on the basis of at least XX" and includes "on the basis of another element in addition to XX." "On the basis of XX" is not limited to direct use of XX and includes use of results obtained by performing calculation or processing on XX. "XX" is an arbitrary factor (for example, arbitrary information).

### <Appearance of vehicle>

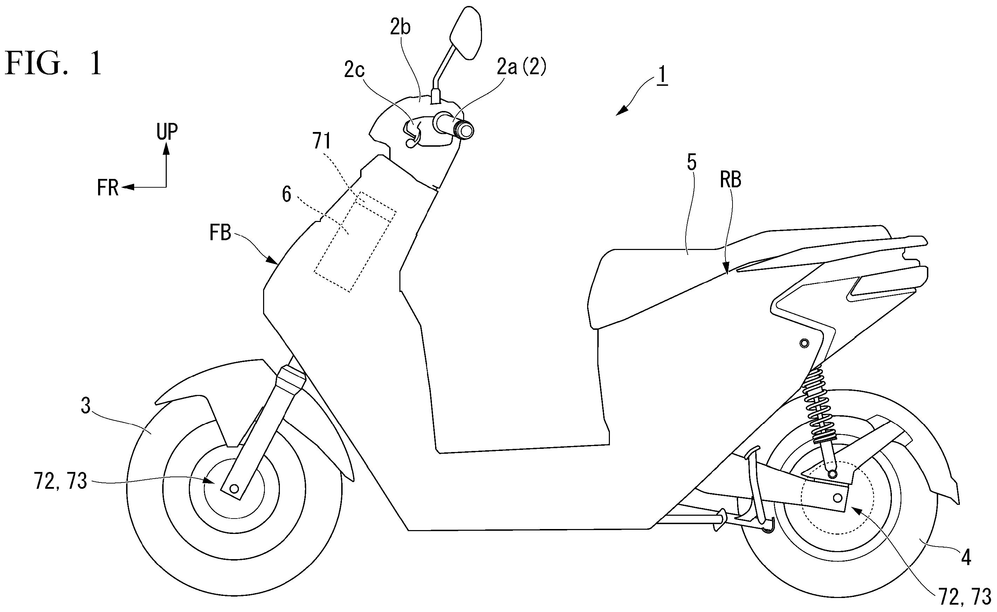

FIG. 1 is a diagram illustrating an example of an appearance of a straddle type vehicle. In FIG. 1, a scooter type two-wheel vehicle 1 including a floor portion (a low floor portion) on which an occupant (a driver) puts his or her legs is illustrated as an example of a straddle type vehicle, but the straddle type vehicle is not limited thereto.

The vehicle 1 includes, for example, a front wheel 3 which is a steering control wheel, a rear wheel 4 which is a driving wheel, a seat 5 on which a driver sits, a front body FB extending forward from the floor portion, a rear body RB extending rearward from the floor portion, a control device 6 (a road-surface friction coefficient estimation device), an IMU 71, a steering angle sensor 72, and a wheel speed sensor 73.

The front wheel 3 can be steered by a bar handle (a steering handle) 2.

A pair of left and right grip portions 2a which are grasped by an occupant's left and right hands is provided on the left and right sides of the bar handle 2. The bar handle 2 except the left and right grip portions 2a is covered by a handle cover 2b.

For example, the control device 6 and the IMU 71 are accommodated in the front body FB. The steering angle sensor 72 and the wheel speed sensor 73 are attached to each of the front wheel and the rear wheel.

### <Road-surface friction coefficient estimation system>

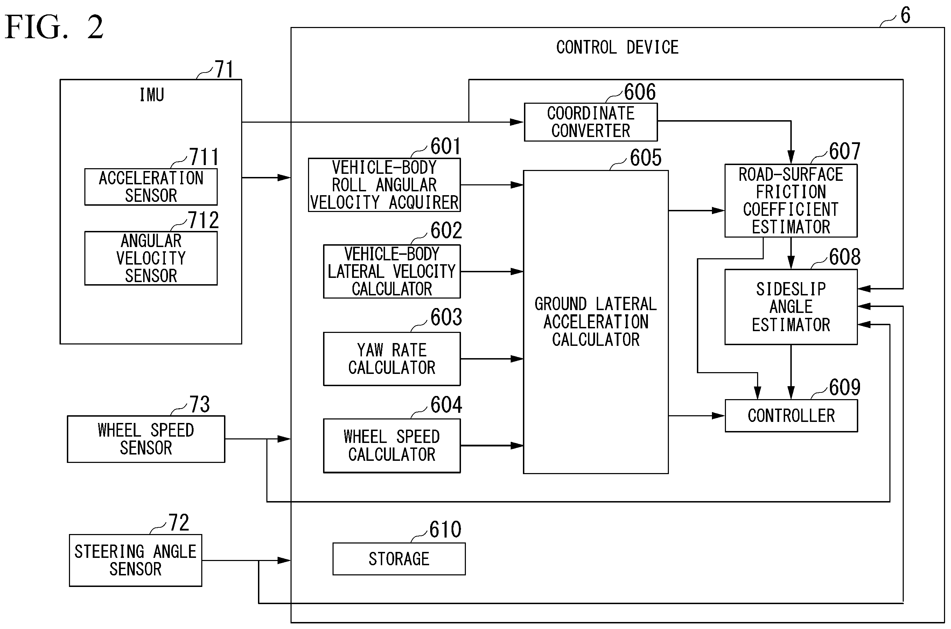

FIG. 2 is a diagram illustrating an example of a configuration of a road-surface friction coefficient estimation system according to the present embodiment. The road-surface friction coefficient estimation system includes, for example, the IMU 71, the steering angle sensor 72, the wheel speed sensor 73, and the control device 6.

The control device 6 includes, for example, a vehicle-body roll angular velocity acquirer 601, a vehicle-body lateral velocity calculator 602, a yaw rate calculator 603, a wheel speed calculator 604, a ground lateral acceleration calculator 605 (a lateral acceleration calculator), a coordinate converter 606, a road-surface friction coefficient estimator 607 (a road-surface friction estimator), a sideslip angle estimator 608, a controller 609, and a storage 610.

The IMU 71 includes, for example, an acceleration sensor 711 and an angular velocity sensor 712.

The acceleration sensor 711 detects, for example, an acceleration in a longitudinal direction of the vehicle 1, a vertical direction of the vehicle 1, and a lateral direction of the vehicle 1.

The angular velocity sensor 712 detects, for example, an angular velocity in a pitch direction of the vehicle 1, a roll direction of the vehicle 1, and a yaw direction of the vehicle 1.

The steering angle sensor 72 detects, for example, a steering angle of the front wheel and a steering angle of the rear wheel.

The wheel speed sensor 73 detects, for example, a wheel speed of the front wheel and a wheel speed of the rear wheel.

The control device 6 is, for example, an engine control unit (ECU).

The vehicle-body roll angular velocity acquirer 601 acquires a vehicle-body roll angular velocity ((-hϕ"_{b})(cosϕ_{b})) from the IMU 71.

The vehicle-body lateral velocity calculator 602 calculates a vehicle-body lateral velocity V'_{oy_geo} using a geometric model of the vehicle based on the assumption that there is no sideslip.

The yaw rate calculator 603 calculates a yaw rate ω_{z_geo} using the geometric model of the vehicle based on the assumption that there is no sideslip.

The wheel speed calculator 604 calculates wheel speeds V_{ox_wheel} of the front wheel and the rear wheel on the basis of a detection value detected by the wheel speed sensor 73.

The ground lateral acceleration calculator 605 calculates a ground lateral acceleration a_{y_model} as expressed by Expression (1) using the vehicle-body roll angular velocity, the vehicle-body lateral velocity, the wheel speed, and the yaw rate.${a}_{{y}_{model}} = {\dot{V}}_{{oy}_{geo}} + {V}_{{ox}_{wheel}} {ω}_{{z}_{geo}} - h {{ϕ}^{¨}}_{b} {cosϕ}_{b}$ (1)

The coordinate converter 606 calculates a lateral acceleration using the acceleration detected by the IMU 71. The coordinate converter 606 performs ground coordinate conversion by subtracting the gravitational acceleration from the calculated lateral acceleration.

The road-surface friction coefficient estimator 607 adjusts parameters m, k, d, and c in Expression (2) and Expression (3), for example, using data while the vehicle 1 is actually traveling. The signs and dynamics of a road-surface friction coefficient model in Expression (2) will be described later. F is a value which is determined when c is determined through comparison between a_{y_act} and a_{y_model}. In Expression (3), Deadzone indicates a dead zone, and a_{y_act} denotes an acceleration converted by the coordinate converter 606. Here, c is a positive integer. The road-surface friction coefficient estimator 607 is a model using dynamics of a road-surface friction coefficient model and is constructed, for example, on the basis of a disturbance observer configuration of the lateral acceleration. A road-surface friction coefficient µ is estimated through comparison between the absolute value of the ground lateral acceleration a_{y_model} (an acceleration model) calculated by the ground lateral acceleration calculator 605 and the absolute value of a_{y_act} which is a conversion result from the coordinate converter 606.$m {μ}^{¨} + d \dot{μ} + k \left(μ-1\right) = F$ (2) $F = Deadzone \left({a}_{{y}_{act}}^{2}-{a}_{{y}_{model}}^{2}\right) ⋅ c$ (3)

The sideslip angle estimator 608 estimates a sideslip angle using the road-surface friction coefficient estimated by the road-surface friction coefficient estimator 607 and the detection values from the IMU 71, the steering angle sensor 72, and the wheel speed sensor 73. The configuration example and the process example of the sideslip angle estimator 608 will be described later.

The controller 609 controls a roll moment due to an acceleration applied from an inertial system using the estimated road-surface friction coefficient and the estimated sideslip angle. The controller 609 controls a roll moment generated with mass point movement or grounding point movement on the basis of the steering angles of the front wheel and the rear wheel.

The storage 610 stores mathematical expressions, predetermined values, and processing algorithms used by the constituents.

### <Dynamics of road-surface friction coefficient model>

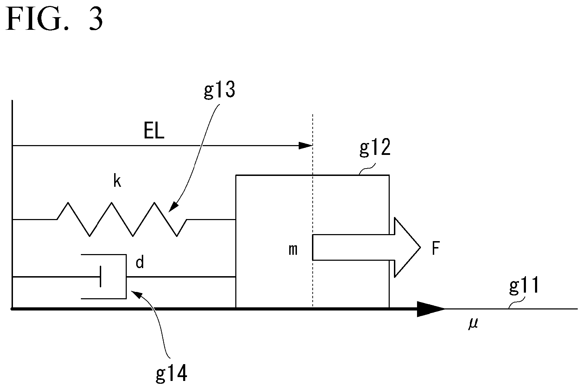

FIG. 3 is a diagram illustrating dynamics of a road-surface friction coefficient model. Reference sign g11 denotes a road surface, reference sign g12 denotes a mass, reference sign g13 denotes a spring, and reference sign g14 denotes a damper. A length EL is a length at which the mass is balanced by the spring and the damper and is a natural length. Here, the natural length is set to 1. Here, m is a mass of the mass, k is a spring constant, d is a damper coefficient, and µ is a road-surface friction coefficient. F is a force applied to the mass and is calculated by Expression (3). The dead zone Deadzone in Expression (3) is determined, for example, by measurement or simulation.

The dynamics of the road-surface friction coefficient model compares the absolute value of the ground lateral acceleration a_{y_model} calculated by the road-surface friction coefficient estimator 607 and the absolute value of a_{y_act} which is a conversion result from the coordinate converter 606 and decreases the road-surface friction coefficient µ when |a_{y_act}|<|a_{y_model}| is satisfied. The dynamics of the road-surface friction coefficient model increases the road-surface friction coefficient µ when |a_{y_act}|>|a_{y_model}| is satisfied. Ideally, |a_{y_act}| and |a_{y_model}| match. However, when they do not match, the road-surface friction coefficient is determined not to be 1 and is adjusted as described above. In the model, the road-surface friction coefficient µ is set to 1 which is an initial value.

### <Calculation of ground lateral acceleration a_{y_model}>

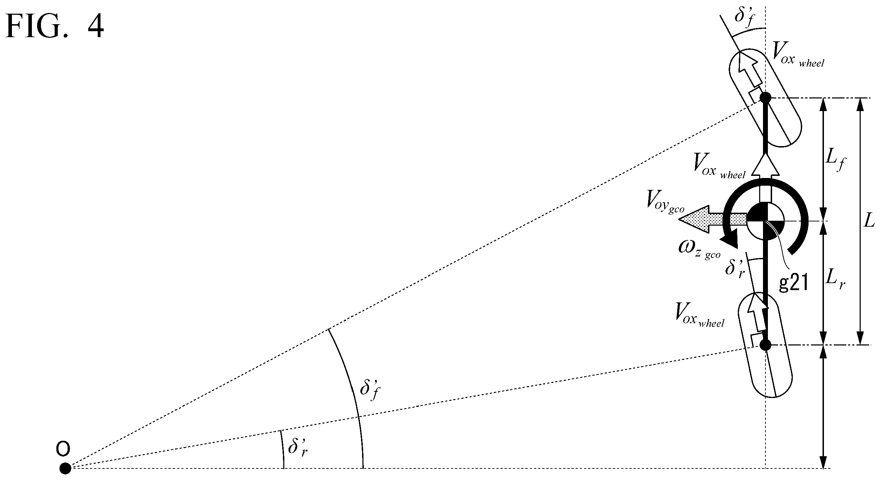

FIG. 4 is a diagram illustrating an example of a geometric model and an example of elements used to calculate the ground lateral acceleration a_{y_model} (an acceleration model value). L is a gap between the front wheel and the rear wheel, Lf is a distance from a position g21 of the center of L (or the center of gravity) to the front wheel, and Lr is a distance from the position g21 of the center of L (or the center of gravity) to the rear wheel. δ'_{f} denotes a tilting angle of the front wheel of the vehicle 1 with respect to the traveling direction and is also an angle formed by a road surface passing through a turning center O and the front wheel passing through the turning center O. V_{ox_wheel} is the wheel speed of each of the front wheel and the rear wheel.

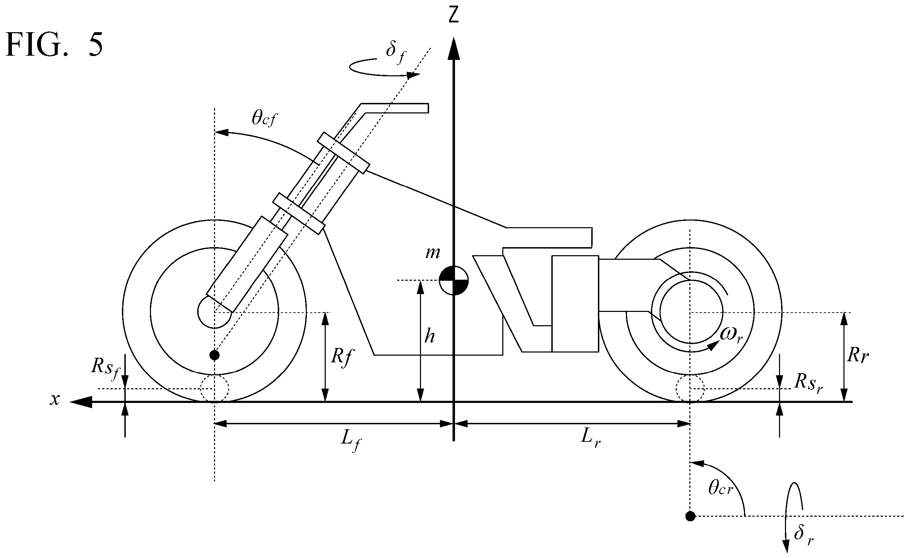

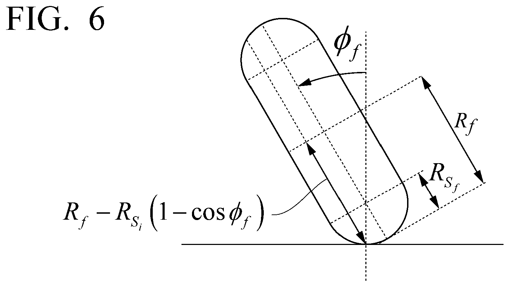

FIG. 5 is a diagram illustrating signs or the like used to calculate the ground lateral acceleration a_{y_model}. FIG. 6 is a diagram illustrating signs or the like used to calculate an actual wheel radius.

In FIGS. 5 and 6, δᵢ is a steering angle of the front wheel or the rear wheel, δᵢ' is an actual steering angle (an actual yaw angle) of the front wheel or the rear wheel, ϕᵢ is a roll angle of the front wheel or the rear wheel, ωᵢ is a wheel angular velocity of the front wheel or the rear wheel, Rᵢ is a wheel radius of the front wheel or the rear wheel, R_{S_i} is a cross-section radius of the front wheel or the rear wheel, and θ_{ci} is a caster angle of the front wheel or the rear wheel. Here, i denotes the front wheel f or the rear wheel r. Rᵢ is a radius of the front wheel or the rear wheel, and h is, for example, a height from the road surface to the center of gravity m.

In Expression (1), V'_{oy_geo} is calculated, for example, by para-differentiating V_{oy_geo} which can be geometrically calculated in Expression (4).${V}_{{oy}_{geo}} = \frac{{V}_{{ox}_{wheel}} \left({L}_{r} tanδ{′}_{f}+{L}_{r} tanδ{′}_{r}\right)}{L}$ (4)

V_{ox_wheel} is expressed by Expression (5), ϕᵢ is expressed by Expression (6), and δᵢ' is expressed by Expression (7).${V}_{{ox}_{wheel}} = {ω}_{i} \left({R}_{i}-{R}_{{S}_{i}}\left(1-{cosϕ}_{i}\right)\right) cos δ {′}_{i}$ (5) ${ϕ}_{i} = {tan}^{- 1} \left(\frac{{sinϕ}_{b} {cosδ}_{i} - {cosϕ}_{b} {sinθ}_{ci} {sinδ}_{i}}{\sqrt{1 - {\left({sinϕ}_{b} {cosδ}_{i}-{cosϕ}_{b} {sinθ}_{ci} {sinδ}_{i}\right)}^{2}}}\right)$ (6) $δ {′}_{i} = {tan}^{- 1} \left(\frac{{cosθ}_{ci} {sinδ}_{i}}{{cosϕ}_{b} {cosδ}_{i} + {cosϕ}_{b} {sinθ}_{ci} {sinδ}_{i}}\right)$ (7)

In Expression (5), (Rᵢ-R_{S_i}(1-cosϕᵢ) denotes an actual wheel radius. In Expression (1), ω_{z_geo} is calculated using Expression (8). ${ω}_{{z}_{geo}} = \frac{{V}_{{ox}_{wheel}} \left(tan {δ}_{f}^{′}-tan {δ}_{r}^{′}\right)}{L}$ (8)

In the related art (for example, see Japanese Patent No. 5208831), an acceleration model value is calculated by dividing a sum of a tire lateral force F_{yf} of the front wheel and a tire lateral force F_{yr} of the rear wheel by the weight of the vehicle using a tire model. The road-surface friction coefficient and the sideslip angle are required for calculating the tire lateral force Fy. In this way, in the related art, estimation of the road-surface friction coefficient and estimation of the sideslip angle depend on each other. When they depend on each other in this way, identification of a parameter for the road-surface friction coefficient and identification of a parameter for estimating the sideslip angle may not be able to be uniquely determined.

On the other hand, in the present embodiment, the ground lateral acceleration a_{y_model} is calculated by Expression (1) using a geometric model based on the assumption that there is no slip without using an estimation result of the sideslip angle.

### <Estimation of sideslip angle>

Estimation of a sideslip angle will be described below. Estimation of a sideslip angle is performed, for example, using the technique described in Patent Document 2.

In this case, in the present embodiment, unlike the technique described in Patent Document 2, an estimated sideslip angle is not used to estimate a road-surface friction coefficient.

### <Example of process flow>

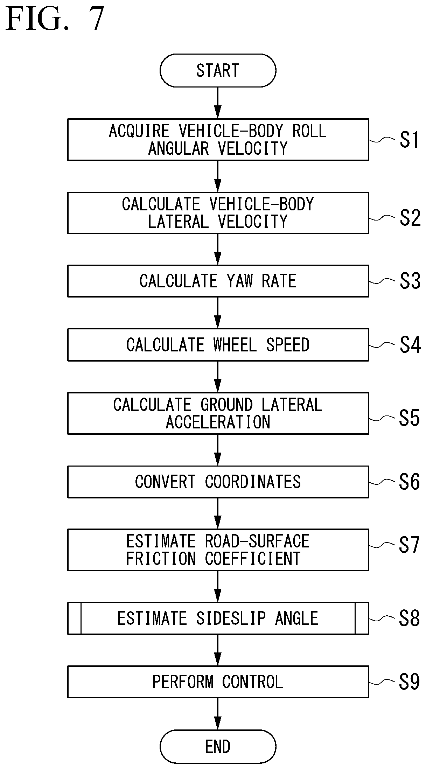

FIG. 7 is a flowchart illustrating an example of a process flow that is performed by the control device according to the present embodiment.

(Step S1) The vehicle-body roll angular velocity acquirer 601 acquires a vehicle-body roll angular velocity ((-hϕ"_{b})(cosϕ_{b})) from the IMU 71.

(Step S2) The vehicle-body lateral velocity calculator 602 calculates a vehicle-body lateral velocity V'_{oy_geo} using the geometric model of the vehicle based on the assumption that there is no slip.

(Step S3) The yaw rate calculator 603 calculates a yaw rate ω_{z_geo} using the geometric model of the vehicle based on the assumption that there is no slip.

(Step S4) The wheel speed calculator 604 calculates wheel speeds V_{ox_wheel} of the front wheel and the rear wheel on the basis of a detected value detected by the wheel speed sensor 73.

(Step S5) The ground lateral acceleration calculator 605 calculates a ground lateral acceleration a_{y_model} as expressed by Expression (1) using the vehicle-body roll angular velocity, the vehicle-body lateral velocity, the wheel speed, and the yaw rate.

(Step S6) The coordinate converter 606 calculates a lateral acceleration using the acceleration detected by the IMU 71. Subsequently, the coordinate converter 606 performs ground coordinate conversion by subtracting the gravitational acceleration from the calculated lateral acceleration.

(Step S7) The road-surface friction coefficient estimator 607 estimates the road-surface friction coefficient µ through comparison between the absolute value of the ground lateral acceleration a_{y_model} (the acceleration model) calculated by the ground lateral acceleration calculator 605 and the absolute value of a_{y_act} which is a conversion result from the coordinate converter 606.

(Step S8) The sideslip angle estimator 608 estimates the sideslip angle using the road-surface friction coefficient estimated by the road-surface friction coefficient estimator 607 and the detected values from the IMU 71, the steering angle sensor 72, and the wheel speed sensor 73.

(Step S9) The controller 609 controls the roll moment due to an acceleration applied from an inertial system using the estimated road-surface friction coefficient and the estimated sideslip angle. The controller 609 controls the roll moment which is generated with mass point position shift or grounding point shift on the basis of the steering angle of the front wheel and the rear wheel.

The control device 6 repeatedly performs the process flow while the vehicle 1 is traveling.

The order or the like of the processes is an example and the present invention is not limited thereto. For example, some processes may be performed in parallel.

### <Example of evaluation result>

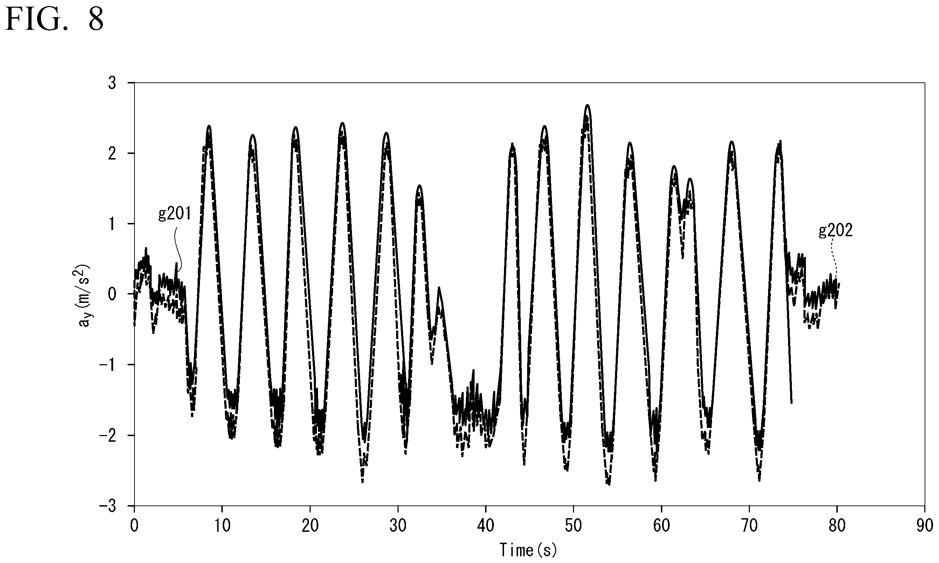

FIG. 8 is a diagram illustrating an example of a measured value and an estimation result of the lateral acceleration at the time of slalom traveling. The horizontal axis represents the time (s), and the vertical axis represents the lateral acceleration ay (m/s²). As evaluation conditions, the vehicle 1 travels on a dry road surface at 15 km/h. A line g201 is a measured value, and a line g202 is a value calculated by the ground lateral acceleration calculator 605 according to the present embodiment.

As illustrated in FIG. 8, it can be seen that the measured value and the estimated value of the lateral acceleration on the dry road surface match almost.

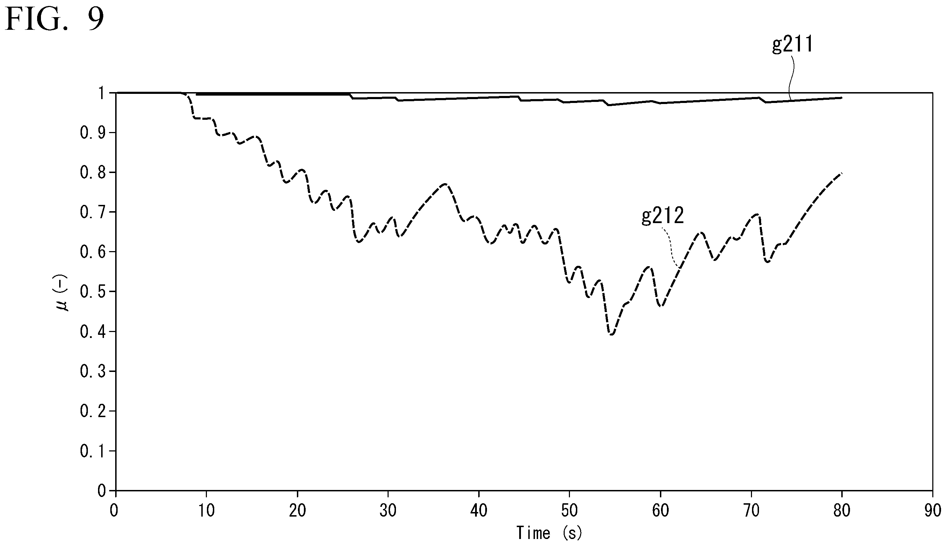

FIG. 9 is a diagram illustrating an example of a road-surface friction coefficient estimation result. The horizontal axis represents the time (s), and the vertical axis represents the road-surface friction coefficient µ(-). A line g211 is an example of a lateral acceleration a_{y_act}=a_{y_act} at the time of traveling on the dry road surface. A line g212 is an example in which the lateral acceleration value is virtually decreased to a half a_{y_act}=0.5 a_{y_act}.

As indicated by the line g211, at the time of traveling on the dry road surface, the road-surface friction coefficient is almost is 1, which is appropriately estimated.

As indicated by the line g212, when the lateral acceleration is vertically decreased to a half, the road-surface friction coefficient is almost 0.5, which is appropriately estimated.

As described above, with the technique according to the present embodiment, it can be seen that the road-surface friction coefficient can be appropriately estimated.

In the aforementioned example, the vehicle 1 is a two-wheel vehicle, but the present invention is not limited thereto. The vehicle 1 may be, for example, a three-wheel vehicle or a four-wheel vehicle. The vehicle 1 may travel using one of an engine, an engine and a motor, and a motor.

In the aforementioned example, the IMU 71 is exemplified as an example of the sensor detecting an acceleration and an angular velocity, but the present invention is not limited thereto. The sensor detecting an acceleration and an angular velocity may be a 6-axis sensor or a combination of an acceleration sensor and an angular velocity sensor.

Some or all of the processes that are performed by the control device 6 may be realized by recording a program for realizing all or some of the functions of the control device 6 according to the present invention on a computer-readable recording medium and causing a computer system to read and execute the program recorded on the recording medium. The "computer system" mentioned herein may include an OS or hardware such as peripherals. The "computer system" may include a WWW system including a homepage provision environment (or display environment). The "computer-readable recording medium" may be a portable medium such as a flexible disk, a magneto-optical disc, a ROM, or a CD-ROM or a storage device such as a hard disk incorporated into a computer system. The "computer-readable recording medium" may include a medium that holds a program for a predetermined time such as a volatile memory (RAM) in a computer system serving as a server or a client when the program is transmitted via a network such as the Internet or a communication circuit line such as a telephone line.

Some or all of these constituents may be realized by hardware (a circuit unit including circuitry) such as an application-specific integrated circuit (ASIC), a field-programmable gate array (FPGA), a graphics processing unit (GPU), or a system on chip (SOC), or a large scale integration (LSI) circuit or may be cooperatively realized by software and hardware.

The program may be transmitted from a computer system in which the program is stored in a storage device or the like to another computer system via a transmission medium or carrier waves in the transmission medium. Here, the "transmission medium" for transmitting a program is a medium having a function of transmitting information such as a network (a communication network) such as the Internet or a communication circuit line (a communication line) such as a telephone line. The program may be a program for realizing some of the aforementioned functions. The program may be a so-called differential file (a differential program) that can realize the aforementioned functions in combination with another program stored in advance in the computer system.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

A road-surface friction coefficient estimation device includes: a lateral acceleration calculator configured to calculate an acceleration in a lateral direction using a wheel speed detected by a wheel speed sensor mounted in a vehicle, a vehicle-body roll angular velocity detected by an angular velocity sensor mounted in the vehicle, and a vehicle-body lateral velocity and a yaw rate calculated from a geometric relationship; a coordinate converter configured to convert an acceleration detected by an acceleration sensor mounted in the vehicle to a measured acceleration in the lateral direction subjected to ground coordinate conversion; and a road-surface friction estimator configured to estimate a road-surface friction coefficient using a road-surface friction model on the basis of the calculated acceleration in the lateral direction and the measured acceleration in the lateral direction.

## Claims

1. A road-surface friction coefficient estimation device (6) comprising:
a lateral acceleration calculator (605) configured to calculate an acceleration in a lateral direction of a vehicle (1); and
a road-surface friction estimator (607) configured to estimate a road-surface friction coefficient using a road-surface friction model on the basis of the calculated acceleration in the lateral direction and a measured acceleration in the lateral direction,
**characterized by**
the lateral acceleration calculator (605) configured to calculate the acceleration in the lateral direction using a wheel speed detected by a wheel speed sensor (73) mounted in the vehicle (1), a vehicle-body roll angular velocity detected by an angular velocity sensor (712) mounted in the vehicle (1), and a vehicle-body lateral velocity and a yaw rate calculated from a geometric relationship,
a coordinate converter (606) configured to convert an acceleration detected by an acceleration sensor (711) mounted in the vehicle (1) to a measured acceleration in the lateral direction subjected to ground coordinate conversion, and
the road-surface friction estimator (607) configured to estimate the road-surface friction coefficient using the road-surface friction model on the basis of the calculated acceleration in the lateral direction and the converted measured acceleration in the lateral direction.

2. The road-surface friction coefficient estimation device (6) according to claim 1, wherein the lateral acceleration calculator (605) calculates the acceleration in the lateral direction under the conditions in which a slip does not occur.

3. The road-surface friction coefficient estimation device (6) according to claim 1, wherein the road-surface friction estimator (607) estimates the road-surface friction coefficient without using a sideslip angle estimated value.

4. The road-surface friction coefficient estimation device (6) according to claim 1, further comprising a controller (609) configured to control a roll moment due to an acceleration applied from an inertial system using the estimated road-surface friction coefficient and a sideslip angle.

5. A road-surface friction coefficient estimation method comprising:
causing a lateral acceleration calculator (605) to calculate an acceleration in a lateral direction of a vehicle (1); and
causing a road-surface friction estimator (607) to estimate a road-surface friction coefficient using a road-surface friction model on the basis of the calculated acceleration in the lateral direction and a measured acceleration in the lateral direction,
**characterized by**
causing the lateral acceleration calculator (605) to calculate the acceleration in the lateral direction using a wheel speed detected by a wheel speed sensor (73) mounted in the vehicle (1), a vehicle-body roll angular velocity detected by an angular velocity sensor (712) mounted in the vehicle (1), and a vehicle-body lateral velocity and a yaw rate calculated from a geometric relationship,
causing a coordinate converter (606) to convert an acceleration detected by an acceleration sensor (711) mounted in the vehicle (1) to a measured acceleration in the lateral direction subjected to ground coordinate conversion, and
causing the road-surface friction estimator (607) to estimate the road-surface friction coefficient using the road-surface friction model on the basis of the calculated acceleration in the lateral direction and the converted measured acceleration in the lateral direction.

6. A non-transitory computer-readable storage medium storing a program, the program causing a computer of a road-surface friction coefficient estimation device (6) to perform:
calculating an acceleration in a lateral direction of a vehicle (1); and
estimating a road-surface friction coefficient using a road-surface friction model on the basis of the calculated acceleration in the lateral direction and a measured acceleration in the lateral direction,
**characterized by**
calculating the acceleration in the lateral direction using a wheel speed detected by a wheel speed sensor (73) mounted in the vehicle (1), a vehicle-body roll angular velocity detected by an angular velocity sensor (712) mounted in the vehicle (1), and a vehicle-body lateral velocity and a yaw rate calculated from a geometric relationship,
converting an acceleration detected by an acceleration sensor (711) mounted in the vehicle (1) to a measured acceleration in the lateral direction subjected to ground coordinate conversion, and
estimating the road-surface friction coefficient using the road-surface friction model on the basis of the calculated acceleration in the lateral direction and the converted measured acceleration in the lateral direction.

## Patentansprüche

1. Fahrbahnreibungskoeffizient-Schätzungsvorrichtung (6), umfassend:
eine Querbeschleunigung-Berechnungseinheit (605), welche dazu eingerichtet ist, eine Beschleunigung in einer Querrichtung eines Fahrzeugs (1) zu berechnen; und
eine Fahrbahnreibung-Schätzungseinheit (607), welche dazu eingerichtet ist, einen Fahrbahnreibungskoeffizienten unter Verwendung eines Fahrbahnreibungsmodells auf der Grundlage der berechneten Beschleunigung in der Querrichtung und einer gemessenen Beschleunigung in der Querrichtung zu schätzen,
**dadurch gekennzeichnet, dass**
die Querbeschleunigung-Berechnungseinheit (605) dazu eingerichtet ist, die Beschleunigung in der Querrichtung unter Verwendung einer Radgeschwindigkeit, welche durch einen Radgeschwindigkeitssensor (73) erfasst ist, welcher in dem Fahrzeug (1) montiert ist, einer Fahrzeugkörper-Rollwinkelgeschwindigkeit, welche durch einen Winkelgeschwindigkeitssensor (712) erfasst ist, welcher in dem Fahrzeug (1) montiert ist, und eine Fahrzeugkörper-Quergeschwindigkeit und eine Gierrate, welche aus einer geometrischen Beziehung berechnet werden, zu berechnen,
eine Koordinatenumwandlungseinheit (606) dazu eingerichtet ist, eine Beschleunigung, welche durch einen Beschleunigungssensor (711) erfasst ist, welcher in dem Fahrzeug (1) montiert ist, in eine gemessene Beschleunigung in der Querrichtung umzuwandeln, welche einer Bodenkoordinatenumwandlung unterzogen ist, und
die Fahrbahnreibung-Schätzungseinheit (607), welche dazu eingerichtet ist, den Fahrbahnreibungskoeffizienten unter Verwendung des Fahrbahnreibungsmodells auf der Grundlage der berechneten Beschleunigung in der Querrichtung und der umgewandelten gemessenen Beschleunigung in der Querrichtung zu schätzen.

2. Fahrbahnreibungskoeffizient-Schätzungsvorrichtung (6) nach Anspruch 1,
wobei die Querbeschleunigung-Berechnungseinheit (605) die Beschleunigung in der Querrichtung unter den Bedingungen berechnet, unter welchen kein Schlupf auftritt.

3. Fahrbahnreibungskoeffizient-Schätzungsvorrichtung (6) nach Anspruch 1,
wobei die Fahrbahnreibung-Schätzungseinheit (607) den Fahrbahnreibungskoeffizienten ohne Verwendung eines geschätzten Schräglaufwinkelwerts schätzt.

4. Fahrbahnreibungskoeffizient-Schätzungsvorrichtung (6) nach Anspruch 1,
ferner umfassend eine Steuereinheit (609), welche dazu eingerichtet ist, ein Rollmoment aufgrund einer Beschleunigung, welche aus einem Inertialsystem aufgebracht wird, unter Verwendung des geschätzten Fahrbahnreibungskoeffizienten und eines Schräglaufwinkels zu steuern.

5. Fahrbahnreibungskoeffizient-Schätzungsverfahren, umfassend:
Veranlassen einer Querbeschleunigung-Berechnungseinheit (605), eine Beschleunigung in einer Querrichtung eines Fahrzeugs (1) zu berechnen; und
Veranlassen einer Fahrbahnreibung-Schätzungseinheit (607), einen Fahrbahnreibungskoeffizienten unter Verwendung eines Fahrbahnreibungsmodells auf der Grundlage der berechneten Beschleunigung in der Querrichtung und einer gemessenen Beschleunigung in der Querrichtung zu schätzen,
**gekennzeichnet durch**
Veranlassen der Querbeschleunigung-Berechnungseinheit (605), die Beschleunigung in der Querrichtung unter Verwendung einer Radgeschwindigkeit, welche durch einen Radgeschwindigkeitssensor (73) erfasst wird, welcher in dem Fahrzeug (1) montiert ist, einer Fahrzeugkörper-Rollwinkelgeschwindigkeit, welche durch einen Winkelgeschwindigkeitssensor (712) erfasst wird, welcher in dem Fahrzeug (1) montiert ist, und einer Fahrzeugkörper-Quergeschwindigkeit und einer Gierrate, welche aus einer geometrischen Beziehung berechnet werden, zu berechnen,
Veranlassen einer Koordinatenumwandlungseinheit (606), eine Beschleunigung, welche durch einen Beschleunigungssensor (711) erfasst wird, welcher in dem Fahrzeug (1) montiert ist, in eine gemessene Beschleunigung in der Querrichtung umzuwandeln, welche einer Bodenkoordinatenumwandlung unterzogen wurde, und
Veranlassen der Fahrbahnreibung-Schätzungseinheit (607), den Fahrbahnreibungskoeffizienten unter Verwendung des Fahrbahnreibungsmodells auf der Grundlage der berechneten Beschleunigung in der Querrichtung und der umgewandelten gemessenen Beschleunigung in der Querrichtung zu schätzen.

6. Nicht-transitorisches computerlesbares Speichermedium, welches ein Programm speichert, wobei das Programm einen Computer einer Fahrbahnreibungskoeffizient-Schätzungsvorrichtung (6) veranlasst, auszuführen:
Berechnen einer Beschleunigung in einer Querrichtung eines Fahrzeugs (1); und
Schätzen eines Fahrbahnreibungskoeffizienten unter Verwendung eines Fahrbahnreibungsmodells auf der Grundlage der berechneten Beschleunigung in der Querrichtung und einer gemessenen Beschleunigung in der Querrichtung,
**gekennzeichnet durch**
Berechnen der Beschleunigung in der Querrichtung unter Verwendung einer Radgeschwindigkeit, welche durch einen Radgeschwindigkeitssensor (73) erfasst wird, welcher in dem Fahrzeug (1) montiert ist, einer Fahrzeugkörper-Rollwinkelgeschwindigkeit, welche durch einen Winkelgeschwindigkeitssensor (712) erfasst wird, welcher in dem Fahrzeug (1) montiert ist, und einer Fahrzeugkörper-Quergeschwindigkeit und einer Gierrate, welche aus einer geometrischen Beziehung berechnet werden,
Umwandeln einer Beschleunigung, welche durch einen Beschleunigungssensor (711) erfasst wird, welcher in dem Fahrzeug (1) montiert ist, in eine gemessene Beschleunigung in der Querrichtung, welche einer Bodenkoordinatenumwandlung unterzogen wurde, und
Schätzen des Fahrbahnreibungskoeffizienten unter Verwendung des Fahrbahnreibungsmodells auf der Grundlage der berechneten Beschleunigung in der Querrichtung und der umgewandelten gemessenen Beschleunigung in der Querrichtung.

## Revendications

1. Dispositif d'estimation de coefficient de frottement de chaussée (6) comportant :
un calculateur d'accélération latérale (605) configuré pour calculer une accélération dans une direction latérale d'un véhicule (1) ; et
un estimateur de frottement de chaussée (607) configuré pour estimer un coefficient de frottement de chaussée à l'aide d'un modèle de frottement de chaussée sur la base de l'accélération calculée dans la direction latérale et d'une accélération mesurée dans la direction latérale,
**caractérisé par**
le calculateur d'accélération latérale (605) configuré pour calculer l'accélération dans la direction latérale à l'aide d'une vitesse de roue détectée par un capteur de vitesse de roue (73) monté sur le véhicule (1), d'une vitesse angulaire de roulis de carrosserie détectée par un capteur de vitesse angulaire (712) monté sur le véhicule (1), et d'une vitesse latérale de carrosserie et d'un taux de lacet calculés à partir d'une relation géométrique,
un convertisseur de coordonnées (606) configuré pour convertir une accélération détectée par un capteur d'accélération (711) monté sur le véhicule (1) en une accélération mesurée dans la direction latérale soumise à une conversion de coordonnées au sol, et
l'estimateur de frottement de chaussée (607) configuré pour estimer le coefficient de frottement de chaussée à l'aide du modèle de frottement de chaussée sur la base de l'accélération calculée dans la direction latérale et de l'accélération mesurée convertie dans la direction latérale.

2. Dispositif d'estimation de coefficient de frottement de chaussée (6) selon la revendication 1, dans lequel le calculateur d'accélération latérale (605) calcule l'accélération dans la direction latérale dans les conditions dans lesquelles une glissade ne se produit pas.

3. Dispositif d'estimation de coefficient de frottement de chaussée (6) selon la revendication 1, dans lequel l'estimateur de frottement de chaussée (607) estime le coefficient de frottement de chaussée sans utiliser une valeur estimée d'angle de dérapage.

4. Dispositif d'estimation de coefficient de frottement de chaussée (6) selon la revendication 1, comportant en outre un dispositif de commande (609) configuré pour commander un moment de roulis dû à une accélération appliquée à partir d'un système inertiel à l'aide du coefficient de frottement de chaussée estimé et d'un angle de dérapage.

5. Procédé d'estimation de coefficient de frottement de chaussée comportant :
le fait d'amener un calculateur d'accélération latérale (605) à calculer une accélération dans une direction latérale d'un véhicule (1) ; et
le fait d'amener un estimateur de frottement de chaussée (607) à estimer un coefficient de frottement de chaussée à l'aide d'un modèle de frottement de chaussée sur la base de l'accélération calculée dans la direction latérale et d'une accélération mesurée dans la direction latérale,
**caractérisé par**
le fait d'amener le calculateur d'accélération latérale (605) à calculer l'accélération dans la direction latérale à l'aide d'une vitesse de roue détectée par un capteur de vitesse de roue (73) monté sur le véhicule (1), d'une vitesse angulaire de roulis de carrosserie détectée par un capteur de vitesse angulaire (712) monté sur le véhicule (1), et d'une vitesse latérale de carrosserie et d'un taux de lacet calculés à partir d'une relation géométrique,
le fait d'amener un convertisseur de coordonnées (606) à convertir une accélération détectée par un capteur d'accélération (711) monté sur le véhicule (1) en une accélération mesurée dans la direction latérale soumise à une conversion de coordonnées au sol, et
le fait d'amener l'estimateur de frottement de chaussée (607) à estimer le coefficient de frottement de chaussée à l'aide du modèle de frottement de chaussée sur la base de l'accélération calculée dans la direction latérale et de l'accélération mesurée convertie dans la direction latérale.

6. Support de stockage non transitoire lisible par ordinateur stockant un programme, le programme amenant un ordinateur d'un dispositif d'estimation de coefficient de frottement de chaussée (6) à réaliser :
le calcul d'une accélération dans une direction latérale d'un véhicule (1) ; et
l'estimation d'un coefficient de frottement de chaussée à l'aide d'un modèle de frottement de chaussée sur la base de l'accélération calculée dans la direction latérale et d'une accélération mesurée dans la direction latérale,
**caractérisé par**
le calcul de l'accélération dans la direction latérale à l'aide d'une vitesse de roue détectée par un capteur de vitesse de roue (73) monté sur le véhicule (1), d'une vitesse angulaire de roulis de carrosserie détectée par un capteur de vitesse angulaire (712) monté sur le véhicule (1), et d'une vitesse latérale de carrosserie et d'un taux de lacet calculés à partir d'une relation géométrique,
la conversion d'une accélération détectée par un capteur d'accélération (711) monté sur le véhicule (1) en une accélération mesurée dans la direction latérale soumise à une conversion de coordonnées au sol, et
l'estimation du coefficient de frottement de chaussée à l'aide du modèle de frottement de chaussée sur la base de l'accélération calculée dans la direction latérale et de l'accélération mesurée convertie dans la direction latérale.
